# EUROPEAN PATENT SPECIFICATION

(11) **EP 2 273 737 B1**
(45) Date of publication and mention of the grant of the patent: **04.10.2017**
(21) Application number: 09290504.1
(22) Date of filing: 30.06.2009
(51) Int. Cl.: H04L 12/801, H04L 12/851, H04L 12/825

(54) **Measurement-based resource access control**
Messungsbasierte Ressourcenzugangssteuerung
Contrôle de l'accès aux ressources d'après les mesures

(43) Date of publication of application: 12.01.2011
(73) Proprietor: ALCATEL LUCENT, 92100 Boulogne-Billancourt (FR)
(72) Inventor: Hublet, Christiaan, 9080 Lochristi (BE); Rogiest, Wouter, 9000 Gent (BE)
(74) Representative: Anderlini, Alain

(56) References cited:
- EP-A- 1 936 880
- STEVEN LATRE ET AL: "An autonomic PCN based admission control mechanism for video services in access networks" INTEGRATED NETWORK MANAGEMENT-WORKSHOPS, 2009. IM '09. IFIP/IEEE INTERNATIONAL SYMPOSIUM ON, IEEE, PISCATAWAY, NJ, USA, 1 June 2009 (2009-06-01), pages 161-168, XP031504392 ISBN: 978-1-4244-3923-2
- MENTH M ET AL: "Performance Evaluation of PCN-Based Admission Control" QUALITY OF SERVICE, 2008. IWQOS 2008. 16TH INTERNATIONAL WORKSHOP ON, IEEE, PISCATAWAY, NJ, USA, 2 June 2008 (2008-06-02), pages 110-120, XP031270230 ISBN: 978-1-4244-2084-1
- PHILIP EARDLEY (EDITOR) NOTIFICATION WORKING GROUP BT: "Pre-Congestion Notification (PCN) Architecture; draft-ietf-pcn-architecture-10.txt" PRE-CONGESTION NOTIFICATION (PCN) ARCHITECTURE; DRAFT-IETF-PCN-ARCHITECTURE-10.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pcn, no. 10, 16 March 2009 (2009-03-16), XP015061210

## Description

### Tecnical Field of the Invention

The present invention relates to resource admission control in a network domain, and more specifically to measurement-based admission control.

### Technical Background of the Invention

The objective of Pre-congestion Notification (PCN) is to protect the Quality of service (QoS) of inelastic flows within a network domain that supports traffic class differentiation, in a simple, scalable and robust fashion. To achieve this, the overall rate of PCN traffic is metered on every link, and PCN packets are appropriately marked when certain configured thresholds are exceeded. The PCN-boundary-nodes use this information to make admission control decisions. These configured rates are thus providing notification to PCN-boundary-nodes about overloads before any congestion occurs. overall the aim is to give an early warning of potential congestion before there is any significant build-up of PCN packets in a queue on a link; PCN was termed by analogy with ECN (Explicit Congestion Notification, [RFC3168]).

Flow admission control determines whether a new flow can be admitted without any impact, in normal circumstances, on the QoS of existing PCN-flows. All PCN-boundary-nodes and PCN-interior-nodes are PCN-enabled and are trusted for correct PCN operation. PCN-ingress-nodes police arriving packets to check that they are part of an admitted PCN-flow that keeps within its agreed flow specification, and hence they maintain per flow state.

Decisions about flow admission are made for an aggregate path between a particular pair of PCN-ingress-node/PCN-egress-node, further referred to as Ingress-Egress Aggregate (IEA). An IEA is basically a path through the network domain from a particular PCN-ingress-node to a particular PCN-egress-node. In steady-state, the IEA is shared by all the unidirectional flows entering the domain at the particular PCN-ingress-node and exiting the domain at the particular PCN-egress-node.

PCN is using a Measurement-Based Admission control (MBAC) mechanism since congestion detection is based on traffic measurements. The congestion state of the path is detected by the PCN-egress-node based on congestion information signaled by the PCN-interior-nodes.

The PCN-intenor-nodes determine the congestion level by comparing the measured bandwidth level (BWM) to a pre-configured threshold bandwidth level (BWC). If the bandwidth level exceeds the threshold, the PCN-interior-node is in pre-congestion. This is signaled by the PCN-interior-node to the PCN-egress-node by marking the data packets. PCN-interior-nodes meter the PCN-traffic on a per interface and traffic class basis, and are neither PCN-flow nor IEA aware.

when a marked data packet is observed by the PCN-egress-node, there is a congestion problem for a certain IEA. Pre-congestion is reported back by the PCN-egress-node to the PCN-ingress-node, which will start refusing new sessions for that IEA.

with MBAC, over-admittance for high resource request rates is unavoidable, due to the resource post-check architecture. In this post-check architecture, the congestion level is determined by comparing the bandwidth level of admitted flows to a pre-configured threshold. The contribution of the new sessions to the resource consumption is not taken into account. For high resource request rates this architectural property could lead to over-admittance due to the delay between the admit decision and the actual contribution of the new session to the congestion level. The delay could be inherent to the PCN-system (e.g., measurement period, signaling delay), but may also be provoked by the traffic sources which could delay the forwarding of the data traffic or could start consuming resources at a low level and ramp up the traffic level later on (e.g., TCP slow start). The measurement period is service-dependent and cannot be reduced infinitely.

This problem can be dealt with by providing some bandwidth headroom (BWH). This bandwidth headroom is taken into account in the congestion detection mechanism of a forwarding point. suppose that the allowed capacity of the service is BWC and the measured bandwidth is BWM then there is congestion when BWC < BWM. In order to take into account the request rate in a post-check architecture, pre-congestion will be reported when (BWC - BWH) < BWM. The required headroom BWH is a function of the above mentioned delay (by the PCN system but also by the traffic sources), the maximum resource request rate to be supported and the required average bandwidth per session.

For instance, assuming a delay of 2 seconds, a request rate of 100 requests per second (e.g., flash crowd), and an average session bandwidth of 2.5 Mbps results in a bandwidth headroom of 500 Nbps. As such the required bandwidth headroom is substantial.

Since this bandwidth headroom will only be taken up by sessions in worst case situations, this bandwidth will be lost in normal situations where the request rate and/or the session throughput are substantially lower. This leads to an under-utilization of the available network capacity.

The above issues remain valid for all Resource Admission Control (RAC) systems making use of a post-check architecture.

The article entitled "An Autononic PCN based Admission Control Mechanism for Video Services in Access Networks", published in June 2009 by the Institute of Electrical and Electronics Engineers, ref. XP031504392, proposes an adaptive resource admission algorithm wherein the PCN threshold is adjusted based on the variance of the aggregated bandwidth as measured over a period of time: the higher the variance, the further is the PCN threshold from the goal rate.

### Summary of the Invention

It is an object of the present invention to improve the session admittance rate (and ultimately the customer satisfaction), and to more efficiently use the available network resources so as to accommodate different traffic profiles and/or network loads.

In accordance with a first embodiment of the invention, a network node operable to form part of a network domain comprises:
- a bandwidth meter for determining a bandwidth consumed by a particular traffic class aggregated through a particular interface,
- a rate meter for estimating a request rate at which new traffic sessions, which are forthcoming contributors to said consumed bandwidth, are requested through said network domain,
- a comparator for comparing said request rate with a maximum allowed request rate that is a function of said consumed bandwidth,
- a signaling unit for notifying a pre-congestion state to a further network node of said network domain if said request rate exceeds said maximum allowed request rate,
wherein said function translates increasing consumed bandwidth in decreasing maximum allowed request rate, and is further arbitrary.

PCN-interior-nodes measure the amount of traffic related to a particular traffic class and aggregated through a particular interface (or port) per unit of time (or consumed bandwidth). Instead of comparing that consumed bandwidth to the maximum available bandwidth minus some fixed bandwidth headroom value, the PCN-interior-nodes further measures or estimate the rate at which new traffic sessions, which are expected to contribute to that consumed bandwidth in the near-future, are requested. A maximum allowed request rate is then derived from the consumed bandwidth by means of a function that translates increasing consumed bandwidth into decreasing (or at least non-increasing) allowed request rate. The measured/estimated request rate is next compared to the maximum allowed request rate. If that threshold is exceeded then a pre-congestion state is signaled to a PCN-boundary-node of the network domain.

This NBAC architecture optimizes the bandwidth usage by making somehow the bandwidth headroom dynamic and fitting the actual network demand.

In accordance with a further embodiment of the invention, estimation of said request rate is based upon a var i at i on over time of s ai d consumed bandwidth.

In accordance with a still further embodiment of the invention, said further network node is an egress node of said network domaine,
and said pre-congestion state is notified by marking data packets belonging to said particular traffic class and aggregated through said particular interface.

In this architecture, the PCN-interior-nodes rely on data plane measurements only. To obtain an estimate of the request rate, the interior node measures the variation rate (i.e., the time derivative) of the consumes bandwidth: a high request rate is associated with a high increase of the consumed bandwidth.

If the maximum allowed request rate (or alternatively the maximum allowed bandwidth increase) is exceeded, the packets are marked and forwarded towards a further network node on the path. The same procedure is applied at each PCN-interior-node. Hence, the pre-congestion status of the IEA is known at the PCN-egress-node, and can be signaled back to the PCN-ingress-node.

The advantages of these embodiments are as follows:
- The admittance decision is taken immediately at the PCN-ingress-node.
- Fits in meshed network.

The disadvantages of these embodiments are as follows:
- There is a delay between excess rate detection and the blocking decision as a result of excess rate which could result in an over-admittance.
- No solution if there is no traffic on the IEA if the admit/block decision is taken at the PCN-ingress-node.

In accordance with an alternative embodiment of the invention, estimation of said request rate is based upon detection of probe massages whereby said network domain is probed for new traffic sessions.

In accordance with a further embodiment of the invention, said pre-congestion state is notified by means of negative responses that are transmitted to an ingress node in response to probe messages.

In this architecture, the PCN-interior-nodes rely on control plane measurements. For each new session, a probe message is issued, typically by the traffic source. The probe message will follow the same path through the network domain as the new session would do, as they typically share the same five-tuple information (source IP address, destination IP address, protocol id, TCP and UDP source port numbers, TCP and UDP destination port number).

Each PCN-interior-node detects the probe message, and is thus aware of the current request rate. If the maximum allowed request rate is not exceeded, the request is forwarded to the next node on the path, else a response is sent back indicating that the request cannot be accepted. Alternatively, the request can be silently discarded, thereby causing the session admittance procedure to fail. When the probe message arrives at the PCN-egress-node, the session can be accepted.

The advantages of these embodiment are as follows:
- The decision is taken immediately by the PCN-interior-node based on the current congestion state and the experienced request rate. As such there is no risk of over-admittance.
- Works fine even in absence of traffic for established sessions.
- Fits in meshed network.

The disadvantages of these embodiments are as follows:
- The admittance decision is delayed at the PCN-ingress-node by the time needed to get a reply for a probe messages.
- Higher complexity and higher performance requirements on the PCN-interior-nodes.

In accordance with another embodiment of the invention, said signaling unit is for further notifying said maximum allowed request rate to said ingress node.

If an allowed request rate could be reported, a richer functionality could be realized. The PCN-interior-node determines the currently allowed request rate based on the current traffic level. The PCN-interior-node reports this allowed request rate to the appropriate PCN-ingress-nodes. The PCN-ingress-node then determines the maximum request rate for an IEA, which is the minimum of all the reported allowed request rates for that IEA The PCN-ingress-node will limit the request rate in line with the reported allowed request rate on this IEA

The advant ages of this embodiment are as follows:
- The admittance decision is taken immediately at ingress.
- Even if there is no traffic on the IEA, the maximum allowed request rate will be known.
- Stable behavior.

The disadvantages of this embodiment are as follows:
- There is a delay between excess rate detection and the blocking decision as a result of excess rate which could result in over-admittance.
- Higher complexity to fit it in a meshed network (simple fit in a tree network since out of band broadcast messages can be used).

Alternatively, the PCN-interior node may report the maximum allowed request rate to the PCN-egress-node, which may then determined the maximum allowed request rate for an IEA from all the reported maximum request rates, and report it back to the PCN-ingress-node for rate-limiting the request rate.

In accor dance with anot her embodiment of the i nvent i on, the network node further comprises a rate-limiting forwarder for limiting the forwarding rate of probe messages up to said maximum allowed request rate.

The present invention also relates to a method for resource admission control in a network domain.

In accordance with the first embodiment of the invention, the method comprises, by a network node of said network domaine:
- determining a bandwidth consumed by a particular traffic class aggregated through a particular interface,
- estimating a request rate at which new traffic sessions, which are forthcoming contributors to said consumed bandwidth, are requested through said network domain,
- comparing said request rate with a maximum allowed request rate that is a function of said consumed bandwidth,
- notifying a pre-congestion state to a further network node of said network domain if said request rate exceeds said maximum allowed request rate,
wherein said function translates increasing consumed bandwidth in decreasing maximum allowed request rate, and is further arbitrary.

Embodiments of a method according to the invention correspond with the embodiments of a network node according to the invention.

### Brief Description of the Acconpanying Drawings

The above and other objects and features of the invention will become more apparent and the invention itself will be best understood by referring to the following description of an embodiment taken in conj unct i on with the accompanying drawings wherein:
- fig. 1 represents a PCN-capable network domain,
- fig. 2 represents a first embodiment for notifying pre-congestion states within a network domain,
- fig. 3 represents a PCN-interior-node,
- fig. 4 represents an output termination module of the PCN-interior-node for notifying pre-congestion states according to the first embodiment,
- fig. 5 represents a second embodiment for notifying pre-congestion states within a network domaine, -fig. 6 represents an output termination module of the PCN interior-node for notifying pre-congestion states according to the second embodiment,
- fig. 7 represents a function plot that translates a consumed bandwidth into a maximum allowed request rate.

### Detailed Description of the Invention

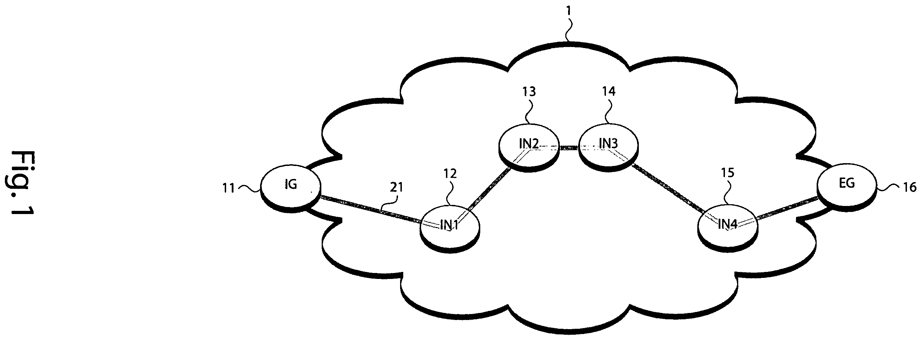

There is seen in fig. 1 an IP-based network domain 1 that supports Diffserv traffic differentiation, and that comprises:
- a PCN-ingress-node 11,
- PCN-interior nodes 12, 13, 14 and 15,
- a PCN-egress-node 16.

An IEA 21 path is drawn as entering the network domain 1 at the PCN-ingress-node 11, going through the PCN-interior-nodes 12 to 15, and exiting the network domain 1 at the PCN-egress-node 16.

A source wanting to start a new QoS flow sends an RSVP PATH message, or an equivalent Next Steps In signaling (NSIS) message. The PATH message travels across the PCN-domain; the PCN-egress-node reads the PHOP object to discover the specific PCN-ingress-node for this flow. An RSVP RESV message travels back from the receiver, and triggers the PCN-egress-node to check whether the path from the relevant PCN-ingress-node is currently pre-congested. It adds an object with this information onto the RESV message, and hence the PCH-ingress-node learns about the pre-congestion status of the path. If the path is not pre-congested, then the PCN-ingress-node admits the new flow into the PCN-domain, else the PCN-ingress-node rejects the new flow. The RSVP message triggers the PCN-ingress-node to install two normal Integrated services (IntServ) items: five-tuple information, so that it can subsequently identify data packets that are part of a previously admitted PCN-flow; and a traffic profile, so that it can police the flow to stay within its contract.

The PCN-ingress-node 11 is configured with the following functionality:
- Packet classification: determine whether an incoming packet is part of a previously admitted flow, by using a filter-spec (e.g., Differentiated services code Point (DSCP), source and destination IP addresses, TCP/UDP port numbers, and protocol identifier).
- Police: police, by dropping, any packets received with a DSCP indicating PCN transport that do not belong to an admitted flow. A prospective PCN-flow that is rejected could be blocked or admitted into a lower priority behavior aggregate. Similarly, police packets that are part of a previously admitted flow, to check that the flow remains within the agreed rate or flowspec.
- PCN-color: set the DSCP and ECN fields appropriately for the PCN-domain.

The PCN-egress-node 16 is configured with the following functionality for each egress link:
- packet classify: determine which PCN-ingress-node a PCN-packet has come from.
- Meter: monitor the PCN-traffic and react to one (or several) PCN-marked packets.
- PCN-color: for PCN-packets, set the DSCP and ECN fields to the appropriate values for use outside the PCN-domain.

The PCN-interior-nodes 12 to 15 supports the routing of traffic towards the appropriate destination with the appropriate traffic priority as reflected in the DSCP field of the data packets.

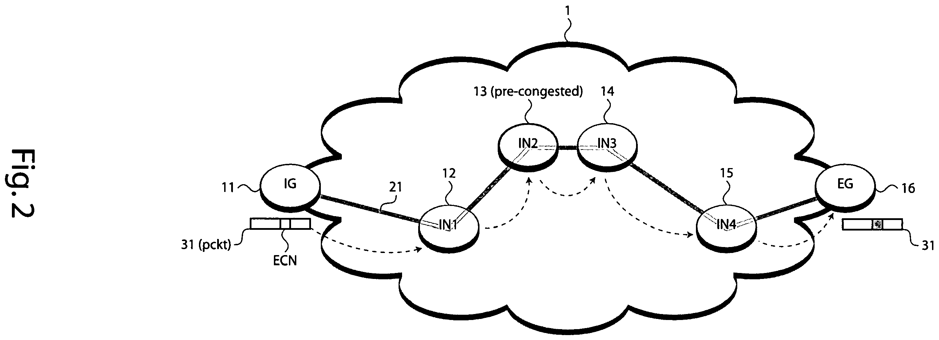

There is seen in fig. 2 a first embodiment of the invention, wherein pre-congestion detection is based on data plane traffic measurements only.

A data packet 31 (or pckt), belonging to a particular traffic flow and marked with an appropriate DSCP, enters the network domain 1 at the PCN-ingress-node 11, and exits the network domain 1 at the PCN-egress-node 16, and as such forms part of the IEA 21. initially, the ECN bit within the IP header of the data packet 31 is not marked (see ECN in fig. 2). The PCN-interior-node 13 detects a pre-congestion state in accordance with the present invention on a particular interface. consequently, data packets flowing through that port, including the data packet 31, start being marked as pre-congested by means of the ECN bit. The marked data packet 31 is further forwarded within the network domain 1 up to the PCN-egress-node 16. The PCN-egress-node 16 detects the marked data packet 31, and thus the pre-congestion state for the IEA 21. This condition is reported back to the PCN-ingress-node 11, which starts rejecting any new traffic session for that particular IEA until the pre-congestion state of the PCN-interior-node 13 is cleared.

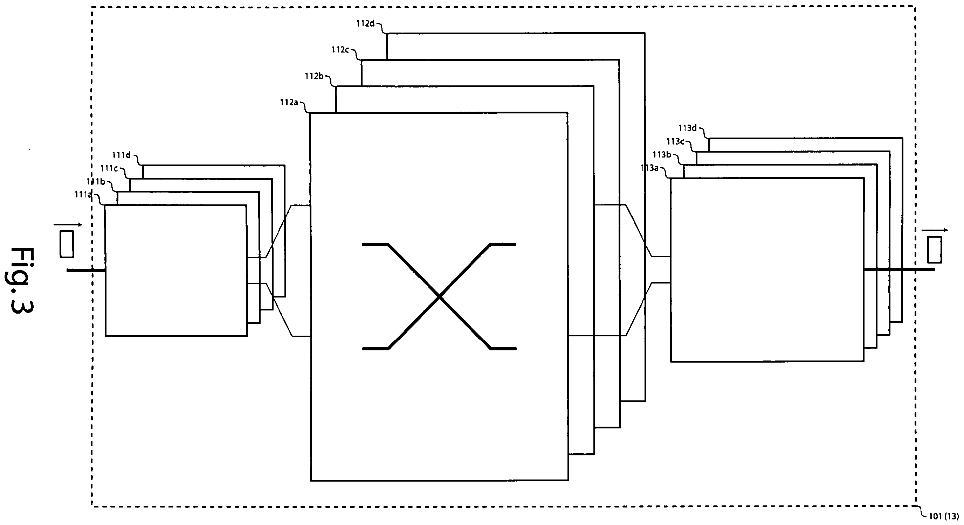

There is seen in fig. 3 a PCN-interior-node 101 comprising the following functional blocks:
- input termination modules 111 for terminating a line signal received through an ingress port,
- output termination modules 113 for originating a line signal transmitted through an egress port,
- a switch core fabric 112, comprising several switching planes 112a to 112d, for switching any incoming data packet from any ingress port towards any egress port according to a switching or routing table.

The input termination modules 111 are coupled to input terminals of the switch core fabric 112, and the output termination modules 113 are coupled to output terminals of the switch core fabric 112.

The input termination modules 111 and the output termination modules 113 typically form part of one or more line termination card.

As an exemplary embodiment of the invention, the PCN-interior-node 101 supports three traffic classes P0, P1 and P2, ranging from a lower-priority traffic class (P0) to a higher-priority traffic class (P2). For instance, P0 stands for the Best Effort (BE) traffic class, P1 stands for the Assured Forwarding (AF) traffic class, and P2 stands for the Expedited Forwarding (EF) traffic class.

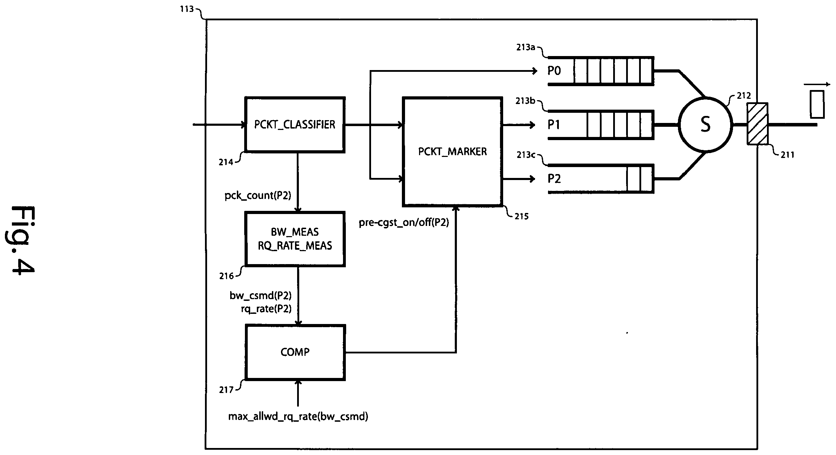

There is seen in fig. 4 further details of an output termination module 113.

The output termination module 113 comprises functional blocks, the most noticeable of which are:.
- an egress port 211,
- an egress scheduler 212 (or S),
- three egress queues 213 for respective ones of the traffic classes P0, P1 and P2,
- a packet classifier 214 (or PCKT_CLASSIFIER),
- a packet marker 215 (or PCKT_MARKER),
- a bandwidth and request rate meter 214 (or BW_MEAS/RQ_RATE_MEAS), and
- a comparator 215 (or COMP).

The packet classifier 214 is coupled to one or more output terminals of the switch core fabric 112. The packet classifier 214 is further coupled to the egress queue 213a, and through the packet marker 215 to the egress queues 213b and 213c. The egress queues 213 are coupled to the scheduler 212, and the scheduler 212 is coupled to the egress port 211. The packet classifier 214 is further coupled to the bandwidth and request rate meter 216. The comparator 217 is coupled to the bandwidth and request rate meter 216 and to the packet marker 215.

The egress port 211 is for originating an electrical or optical signal towards a peer network node, such as a Gigabit Ethernet signal, and for encoding outgoing data packets in a format suitable for their physical transmission.

The egress queues 213 are basically First-In First-Out (FIFO) queues adapted to backlog outgoing data packets belonging to respective ones of the traffic classes P0, P1 and P2.

The egress scheduler 212 is for scheduling data packets from the egress queues 213 towards the egress port 211 in proportion to their respective service share. For instance, the egress scheduler 212 is a weighted Fair Queuing (WFQ) work-conserving schedulers. Each queue is allotted a service share or weight: the higher the weight, the more data packets are scheduled from that queue. In addition, the egress scheduler 212 may implement strict priority rules for certain traffic classes, such as the EF traffic class.

The packet classifier 214 is for dispatching the data packets coming from the switch core fabric 112 into the appropriate egress queue according to their respective DSCP value. The packet classifier is for further counting the number of packets (or bytes) transferred for a particular traffic class.

The packet marker 215 is for marking outgoing packets, and more specifically for setting or resetting the ECN bit within the IP header according to the outcome of the comparison step. Another marking can be implemented too by means of another field within the packet header.

The bandwidth and request rate meter 216 is for measuring a bandwidth (i.e., an amount of traffic exchanged per unit of time) consumed by a particular traffic class (see bw_csmd(P2) in fig. 4) based on packet counting as carried out by the packet classifier 214 (see pck_count(P2) in fig. 4).

The bandwidth and request rate meter 216 is for further measuring the time-derivative of the bandwidth consumed by a particular traffic class (see rq_rate(P2) in fig. 4), which is expected to be a good estimator of the rate at which new traffic sessions are requested for a particular IEA.

The comparator 217 is for comparing a request rate measured for a particular traffic class with a maximum allowed request rate for that traffic class. The maximum allowed request rate is an averagely-decreasing function of the measured consumed bandwidth (see max_allwd_rq_rate(bw_csmd) in fig. 4).

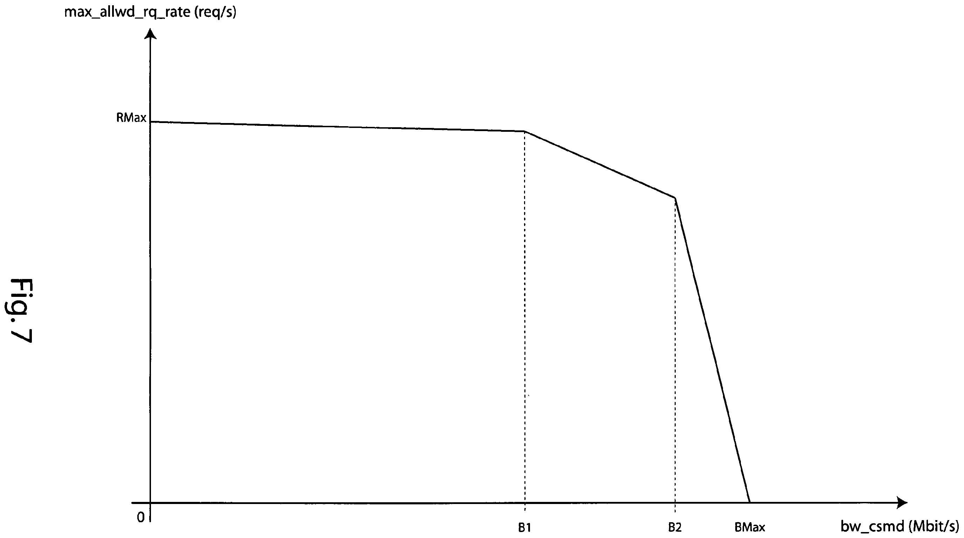

There is plotted in fig. 7 an exemplary embodiment of this function. Yet, other alternative functions can be thought of.

in this particular plot, 3 regimes are shown:
- when the consumed bandwidth is below B1, then the maximum allowed request rate is very close to the maximum sustainable request rate Rmax. This part is shown as slightly decreasing, yet it can be constant.
- when the consumed bandwidth is between B1 and B2, then the maximum allowed request rate starts decreasing.
- when the consumed bandwidth is above B2, then the maximum allowed request rate decreases at a further extent, and quickly drops to zero.

If the measured request rate exceeds the maximum allowed request rate, then a notification is sent to the packet marker 215 (see pre-cgst_on(P2) in fig. 4), which starts marking the packets of the corresponding traffic class. If the measured request rate drops below the maximum allowed request rate, then another notification is sent to the packet marker 215 (see pre-cgst_off in fig. 4), which stops marking the packets of the corresponding traffic class. Some threshold hysteresis or alike may be implemented so as to avoid toggling the pre-congestion state too often.

The time periods over which the consumed bandwidth and the request rate are measured should match each other for the comparison to be meaningful.

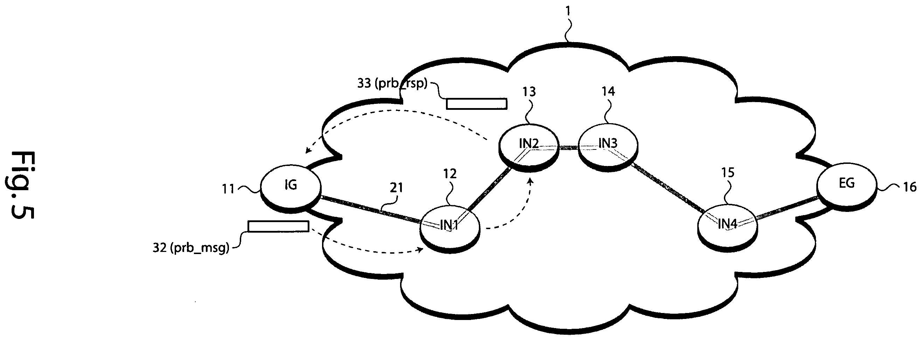

There is seen in fig. 5 an alternative embodiment of the invention, wherein pre-congestion detection is based on control plane traffic measurements.

A probe message 32 (or prb_msg) whereby a new traffic session is requested, such as a RSVP PATH message or an equivalent NSIS message, enters the network domain 1 at the PCN-ingress-node 11. The probe message travels through the PCN-interior-nodes. Upon detection of a probe message, each PCN-interior-node checks whether the corresponding path is pre-congested. If so, the probe message 32 is discarded, and a negative responses 33 (or prb_rsp), such as a RSVP RESV message or an equivalent NSIS message, is sent back to the PCN-ingress-node 11. Else, the probe message 32 is forwarded further in the network.

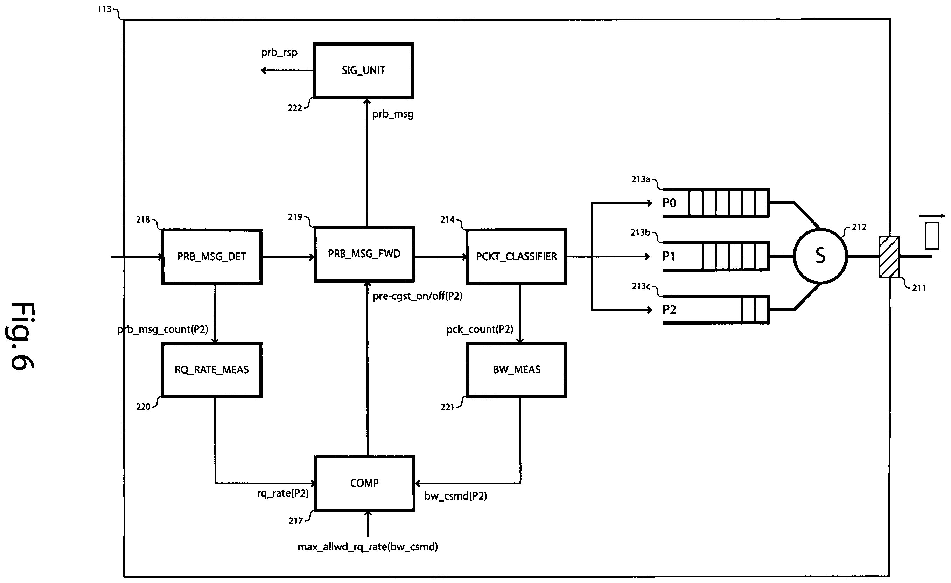

There is seen in fig. 6 an alternative embodiment of the output termination module 113.

The output termination module 113 comprises functional blocks, the most noticeable of which are:
- the egress port 211,
- the egress scheduler 212,
- the three egress queues 213 for respective ones of the traffic classes P0, P1 and P2,
- a probe message detector 218 (or PRB_MSG_DET),
- a probe message forwarder 219 (or PRB_MSG_FWD),
- the packet classifier 214,
- a request rate meter 220 (or RQ_RATE_MEAS),
- a bandwidth meter 221 (or BW-MEAS),
- the comparator 217, and
- a signaling unit 222.

The detector 218 is coupled to one or more output terminals of the switch core fabric 112. The detector 218 is further coupled to the forwarder 219. The forwarder 219 is further coupled to the packet classifier 214 and to the signaling unit 222. The packet classifier 214 is further coupled to the egress queues 213. The egress queues 213 are further coupled to the scheduler 212, and the scheduler 212 is further coupled to the egress port 211. The detector 218 and the packet classifier 214 are further coupled to the request rate meter 220 and the bandwidth meter 221 respectively. The comparator 217 is coupled to the request rate meter 220, to the bandwidth meter 221, and to the forwarder 219.

The detector 218 is for detecting any probe message, such as a RSVP PATH message or an equivalent NSIS message, aggregated over the egress port 211.

The forwarder 219 is for forwarding probe messages either towards the packet classifier 214 (for further forwarding towards another network node), or towards the signaling unit 222 (for issuing corresponding negative responses), based on the pre-congestion status of the corresponding traffic class.

The request rate meter 220 is for measuring the rate at which new traffic sessions are requested for a particular traffic class (see rq_rate(P2) in fig. 6) based on probe message counting as carried out by the detector 218 (see prb_msg_count(P2) in fig. 6).

The bandwidth meter 221 is for measuring a bandwidth consumed by a particular traffic class (see bw_csmd(P2) in fig. 6) based on packet counting as carried out by the packet classifier 214 (see pck_count(P2) in fig. 6).

The signaling unit 222 is for, upon receipt of a probe message from the forwarder 219, issuing a corresponding negative response, such as an RSVP RESV message or an equivalent NSIS message, towards a PCN-ingress-node. The response message is built up from the probe message (e.g., for retrieving the identity of the PCN-ingress-node), and indicates a negative outcome of the session admittance procedure, thereby causing the corresponding request for a new traffic session to be rejected.

If the measured request rate exceeds the maximum allowed request rate for a particular traffic class, then the comparator 217 sends a notification to the forwarder 219 (see pre-cgst_on(P2) in fig. 4), which starts forwarding the probe messages for that particular traffic class towards the signaling unit 222, causing the signaling unit 222 to issue corresponding negative responses towards the appropriate PCN-ingress-nodes. If the measured request rate drops below the maximum allowed request rate, then another notification is sent to the forwarder 219 (see pre-cgs_off in fig. 4), which stops forwarding the probe messages towards the signaling unit 222, and starts forwarding the probe messages towards the packet classifier 214 for further scheduling towards a further network node of the network domain.

In still an alternative embodiment of the invention, the forwarder 219 is further adapted to rate-limit the forwarding of probe messages up to the maximum allowed request rate (which piece of information being supplied by the comparator 217). Thus, only a certain excess amount of probe messages is forwarded towards the signaling unit 222, which issues corresponding negative responses.

In still an alternative embodiment of the invention, the request rate is determined as a weighted sum of the rate at which probe messages are detected and of the time-derivative of the consumed bandwidth.

In a further embodiment of the present invention, the maximum allowed request rate, which is a function of the actual consumed bandwidth, is notified to the appropriate PCN-ingress-nodes, so as they can take proactive measures for rate-limiting the requests for new traffic sessions according to the actual traffic load incurred by the PCN-interior nodes.

Other architectural design choices are possible too, such as moving the signaling unit 222 and/or the comparator 217 and/or further functional blocks outside the output termination module so as to share them across multiple output termination modules.

The detection of the pre-congestion state according to the invention may be implemented at any contention point within the PCN-interior node 101, being of physical or logical nature, for instance at the input termination modules 111 before the traffic enters the switch core fabric 112.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. when provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. other hardware, conventional and/or custom, such as read only memory (ROM), random access memory (RAM), and non volatile storage, may also be included.

## Claims

1. **A network node** (13) operable to form part of **a network domain** (1), and conprising:
- **a bandwidth meter** (216, 221) for determining **a bandwidth** consumed (bw_csmd) by a **particular traffic class** (P2) aggregated through **a particular interface** (211), ***characterized in that*** the network node further conprises:
- **a rate meter** (216, 220) for estimating **a request rate** (rq_rate) at which new traffic sessions, which are forthcoming contributors to said consumed bandwidth, are requested through said network domain,
- **a comparator** (217) for comparing said request rate with **a maximum allowed request rate** (max_allwed_rq_rate) that is **a function** of said consumed bandwidth,
- **a signaling unit** (215, 222) for notifying **a pre-congestion state to a further network node** (11, 16) of said network domaine if said request rate exceeds said maximum allowed request rate, wherein said function translates increasing consumed bandwidth in decreasing maximum allowed request rate, and is further arbitrary.

2. **A network node** (13) according to claim 1, ***characterized in that*** estimatiom of said request rate is based upon a variation over time of said consumed bandwidth.

3. **A netmork node** (13) according t o claims 2, ***characterized in that*** said further network node is **an egress node** (16) of said network domain,
*and **in that*** said pre-congestion state is notified by marking **data packets** (31) belonging to said particular traffic class and aggregated through said particular interface.

4. **A network node** (13) according to claim 1, ***characterized in that*** estimation of said request rate is based upon detection of **probe messages** (32) whereby said network domain is probed for new traffic sessions.

5. **A network node** (13) according to claim 4, ***characterized in that*** said further network node is **an ingress node** (11), *and **in that*** said pre-congestion state is notified by means of **negative responses** (33) that are transmitted in response to **probe messages** (32).

6. **A network node** (13) according to claim 5, ***characterized in that*** said signaling unit is for further notifying said maximum allowed request rate to said ingress node.

7. **A network node** (13) according to any of claims 4 or 5, and further comprising **a rate-limiting forwarder** (219) for limiting the forwarding rate of probe messages up to said maximum allowed request rate.

8. **A** method for resource admission control in **a network** domain (1), and conprising, by **a network node** (13) of said network domain:
- determining **a** bandwidth consumed (bw_csmd) by **a particular traffic class** (P2) aggregated through **a particular interface** (211),
***characterized in that*** the method further comprises:
- estimating **a request rate** (rq_rate) at which new traffic sessions, which are forthcoming contributors to said consumed bandwidth, are requested through said network domain,
- comparing said request rate with **a** maximum **allowed request rate** (max_allwd_rq_rate) that is **a function** of said consumed bandwidth,
- notifying **a pre-congestion state** to **a further network node** (11, 16) of said network domain if said request rate exceeds said maximum allowed request rate, wherein said function translates increasing consumed bandwidth in decreasing maximum allowed request rate, and is further arbitrary.

## Patentansprüche

1. **Netzwerkknoten** (13), der betriebsfähig ist, um Bestandteil **einer Netzwerk-Domain** (1) zu sein, und umfassend:
- **einen Bandbreitenmesser** (216, 221) zum Bestimmen **einer Bandbreite** (bw_csmd), die von **einer bestimmten Verkehrsklasse** (P2) verbraucht wird, vereinigt durch **eine bestimmte Schnittstelle** (211),
***dadurch gekennzeichnet, dass*** der Netzwerkknoten weiterhin Folgendes umfasst:
- **einen Ratenmesser** (216, 220) zum Schätzen **einer Anfragenrate** (rq_rate), mit der neue Verkehrssitzungen, die bevorstehende Beitragende zu der besagten verbrauchten Bandbreite sind, über die besagte Netzwerk-Domain angefordert werden,
- **einen Komparator** (217) zum Vergleichen der besagten Anfragenrate mit **einer höchstzulässigen Anfragenrate** (max_allwd_rq_rate), die **eine Funktion** von der besagten verbrauchten Bandbreite ist,
- **eine Signalisierungseinheit** (215, 222) zum Mitteilen **eines Vorüberlastungszustands** an einen **weiteren Netzwerkknoten** (11, 16) der besagten Netzwerk-Domain, falls die besagte Anfragenrate die besagte höchstzulässige Anfragenrate übersteigt,
wobei die besagte Funktion eine zunehmende verbrauchte Bandbreite in eine abnehmende höchstzulässige Anfragenrate überträgt und des Weiteren arbiträr ist.

2. **Netzwerkknoten** (13) nach Anspruch 1, ***dadurch gekennzeichnet, dass*** die Schätzung der besagten Anfragenrate auf einer zeitlichen Schwankung der besagten verbrauchten Bandbreite basiert.

3. **Netzwerkknoten** (13) nach Anspruch 2, ***dadurch gekennzeichnet,* dass** der besagte weitere Netzwerkknoten **ein Ausgangsknoten** (16) der besagten Netzwerk-Domain ist,
*und dadurch, dass* der besagte Vorüberlastungszustand mitgeteilt wird durch Markieren von **Datenpaketen** (31), die zu der besagten bestimmten Verkehrsklasse gehören und durch die besagte bestimmte Schnittstelle vereinigt werden.

4. **Netzwerkknoten** (13) nach Anspruch 1, ***dadurch gekennzeichnet, dass*** die Schätzung der besagten Anfragenrate auf einer Erkennung von **Prüfnachrichten** (32) basiert, wobei die besagte Netzwerk-Domain auf neue Verkehrssitzungen geprüft wird.

5. **Netzwerkknoten** (13) nach Anspruch 4, ***dadurch gekennzeichnet, dass*** der besagte weitere Netzwerkknoten **ein Eingangsknoten** (11) ist,
*und dadurch, dass* der besagte Vorüberlastungszustand mitgeteilt wird mittels **Negativantworten** (33), die als Antwort auf **Prüfnachrichten** (32) übermittelt werden.

6. **Netzwerkknoten** (13) nach Anspruch 5, ***dadurch gekennzeichnet, dass*** die besagte Signalisierungseinheit zum weiteren Mitteilen der besagten höchstzulässigen Anfragenrate an den besagten Eingangsknoten dient.

7. **Netzwerkknoten** (13) nach einem beliebigen der Ansprüche 4 oder 5, und weiterhin umfassend **eine ratenbegrenzende Weiterleitungseinrichtung** (219) zum Begrenzen der Weiterleitungsrate von Prüfnachrichten auf die besagte höchstzulässige Anfragenrate.

8. **Verfahren** zur Ressourcenzulassungssteuerung in **einer Netzwerk-Domain** (1), und umfassend, durch **einen Netzwerkknoten** (13) der besagten Netzwerk-Domain:
- Bestimmen **einer Bandbreite** (bw_csmd), die von **einer bestimmten Verkehrsklasse** (P2) verbraucht wird, vereinigt durch **eine bestimmte Schnittstelle** (211),
***dadurch gekennzeichnet, dass*** das Verfahren weiterhin Folgendes umfasst:
- Schätzen **einer Anfragenrate** (rq_rate), mit der neue Verkehrssitzungen, die bevorstehende Beitragende zu der besagten verbrauchten Bandbreite sind, über die besagte Netzwerk-Domain angefordert werden,
- Vergleichen der besagten Anfragenrate mit **einer höchstzulässigen Anfragenrate** (max_allwd_rq_rate), die **eine Funktion** von der besagten verbrauchten Bandbreite ist,
- Mitteilen **eines Vorüberlastungszustands** an **einen weiteren Netzwerkknoten** (11, 16) der besagten Netzwerk-Domain, falls die besagte Anfragenrate die besagte höchstzulässige Anfragenrate übersteigt,
wobei die besagte Funktion eine zunehmende verbrauchte Bandbreite in eine abnehmende höchstzulässige Anfragenrate überträgt und des Weiteren arbiträr ist.

## Revendications

1. **Noeud de réseau** (13) pouvant faire partie **d'un domaine de réseau** (1), et comprenant :
- **un dispositif de mesure de bande passante** (216, 221) pour déterminer **une bande passante** consommée (bw_csmd) par **une classe de trafic particulière** (P2) agrégée par l'intermédiaire d'une **interface particulière** (211),
***caractérisé en ce que*** le noeud de réseau comprend en outre
- **un dispositif de mesure du taux** (216, 220) pour estimer **un taux de demande** (rq_rate) auquel de nouvelles sessions de trafic, qui sont des contributeurs ultérieurs de ladite bande passante consommée, sont demandées par l'intermédiaire dudit domaine de réseau,
- **un comparateur** (217) pour comparer ledit taux de demande à **un taux de demande autorisé maximum** (max_allwd_rq_rate) qui est **fonction** de ladite bande passante consommée,
- **une unité de signalisation** (215, 222) pour notifier **un état de pré-encombrement** à **un autre noeud de réseau** (11, 16) dudit domaine de réseau si ledit taux de demande dépasse ledit taux de demande autorisé maximum,
dans lequel ladite fonction convertit une bande passante consommée croissante en un taux de demande autorisé maximum décroissant, et est en outre arbitraire.

2. **Noeud de réseau** (13) selon la revendication 1, ***caractérisé en ce que*** l'estimation dudit taux de demande est basée sur une variation dans le temps de ladite bande passante consommée.

3. **Noeud de réseau** (13) selon la revendication 2, ***caractérisé en ce que*** ledit autre noeud de réseau est **un noeud de sortie** (16) dudit domaine de réseau,
*et **en ce que** ledit* état de pré-encombrement est notifié en marquant des **paquets de données** (31) appartenant à ladite classe de trafic particulière et agrégé par l'intermédiaire de ladite interface particulière.

4. **Noeud de réseau** (13) selon la revendication 1, ***caractérisé en* ce qu'**une estimation dudit taux de demande est basée sur une détection de **messages de sonde** (32), ledit domaine de réseau étant ainsi sondé pour de nouvelles sessions de trafic.

5. **Noeud de réseau** (13) selon la revendication 4, ***caractérisé en ce que*** ledit autre noeud de réseau est **un noeud d'entrée** (11),
*et **en ce que*** ledit état de pré-encombrement est notifié au moyen de **réponses négatives** (33) qui sont transmises en réponse aux **messages de sonde** (32).

6. **Noeud de réseau** (13) selon la revendication 5, ***caractérisé en ce que*** ladite unité de signalisation est pour une notification ultérieure dudit taux de demande autorisé maximum audit noeud d'entrée.

7. **Noeud de réseau** (13) selon l'une quelconque des revendications 4 et 5, et comprenant en outre **un dispositif de transfert à limitation de débit** (219) pour limiter le débit de transfert de messages de sonde audit taux de demande autorisé maximum.

8. **Procédé** de contrôle d'admission des ressources dans **un domaine de réseau** (1), et comprenant, au moyen d'un **noeud de réseau** (13) dudit domaine de réseau, l'étape suivante :
- déterminer **une bande passante** consommée (bw_csmd) par **une classe de trafic particulière** (P2) agrégée par l'intermédiaire d'**une interface particulière** (211),
***caractérisé en ce que*** le procédé comprend en outre les étapes suivantes :
- estimer **un taux de demande** (rq_rate) auquel de nouvelles sessions de trafic, qui sont des contributeurs ultérieurs de ladite bande passante consommée, sont demandées par l'intermédiaire dudit domaine de réseau,
- comparer ledit taux de demande à **un taux de demande autorisé maximum** (max_allwd_rq_rate) qui est **fonction** de ladite bande passante consommée,
- notifier **un état de pré-encombrement** à **un autre noeud de réseau** (11, 16) dudit domaine de réseau si ledit taux de demande dépasse ledit taux de demande autorisé maximum,
dans lequel ladite fonction convertit une bande passante consommée croissante en un taux de demande autorisé maximum décroissant, et est en outre arbitraire.
